Europäisches Patentamt

European Patent Office

Office européen des brevets

(11) Numéro de publication: **0 167 421**
**B1**

(12) **FASCICULE DE BREVET EUROPEEN**

(45) Date de publication du fascicule du brevet:
**09.03.88**

(21) Numéro de dépôt: **85400908.1**

(22) Date de dépôt: **10.05.85**

(51) Int. Cl.⁴: **F 16 L 13/02**

(54) Noveau raccord de tubes revêtus intérieurement et son procédé de fabrication.

(30) Priorité: **24.05.84 FR 8408152**

(43) Date de publication de la demande:
**08.01.86 Bulletin 86/2**

(45) Mention de la délivrance du brevet:
**09.03.88 Bulletin 88/10**

(84) Etats contractants désignés:
**AT BE CH DE FR GB IT LI LU NL SE**

(56) Documents cités:
**EP - A - 0 114 058**
**DE - B - 1 102 707**
**FR - A - 992 388**
**FR - A - 1 199 181**
**GB - A - 401 615**
**GB - A - 2 094 915**

(73) Titulaire: **ATOCHEM, 4 & 8, Cours Michelet La
Défense 10, F-92800 Puteaux (FR)**

(72) Inventeur: **Lescaut, Pierre Louis, Vieille Sente du
Mascrier, F-27300 Bernay (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention se situe dans le domaine de l'assemblage par soudure autogène des tubes de grand diamètre (par exemple les tubes pour oléoducs d'un diamètre de 200 mm ou encore supérieur).

Ces tubes sont actuellement réalisés en tronçons longs de 6 à 15 m et sont munis d'un revêtement intérieur anti-corrosion ou anti-abrasion selon les fluides transportés.

Par fluides il faut entendre de la façon la plus générale les liquides pétroliers, l'eau, les solutions et lessives chimiques, les suspensions dans l'eau de solides tels que les fines de houille ou slurries etc.

Les tubes adaptés au transport de ces fluides reçoivent habituellement des protections intérieures qui sont, suivant les cas et les degrés d'évolution de la technique:

. du ciment centrifugé
. des bitumes
. des revêtements à base de polyuréthannes
. des revêtements à base de résines époxy catalysées durcissant à froid.

Avec tous ces revêtements du fait respectivement, soit de leur tendance à la fissuration, de leur fusibilité, de leur tendance à la pyrolyse à la température de soudage des tubes, on est obligé de réserver aux extrémités une largeur non revêtue pouvant varier entre un demi et deux diamètres en fonction du diamètre, de l'épaisseur de parois du tube, de la nature du revêtement.

Ces portions non revêtues sont donc le siège d'une corrosion intense parce que concentrée, imposant le remplacement onéreux des tubes au bout de périodes de temps plus ou moins longues.

D'autres solutions font appel à des brides métalliques munies de lèvres en matière élastomère venant prendre appui sur le revêtement intérieur qui est réalisé dans ce cas sans réserves jusqu'aux extrémités des tronçons de tubes. L'inconvénient de telles solutions est qu'elles ne résistent pas aux pressions élevées et doivent être réservées aux basses pressions seulement (inférieures à 35 bars).

Une autre solution consiste à utiliser des bagues de raccordement en acier inoxydable. C'est une solution qui se révèle toujours onéreuse, et qui peut même conduire à des solutions complexes dans le cas où le revêtement intérieur du tube est épais, dans le cas où l'on recherche par exemple une résistance spéciale à l'abrasion.

C'est le cas par exemple des procédés décrits dans les brevets de l'art antérieur suivants:
. brevet britannique n° 401 615 où l'on voit une bague à double portée conique munie d'une nervure de positionnement, ce procédé imposant un tulipage des extrémités des tuyaux à raccorder;
. brevet français n° 992 388 dans lequel une bague est insérée à chaque extrémité des tuyaux, le bord extérieur de la bague faisant saillie pour en permettre la soudure sur l'extrémité du tyau.

Il faut alors prévoir un épaulement tenant compte de l'épaisseur du revêtement et l'obtention d'une bonne étanchéité est dans ce cas délicate.

Le but de la présente invention est de remédier à ces inconvénients d'une façon simple.

Elle comporte une première étape de fabrication, réalisée en atelier. Les tubes reçoivent à chaque extrémité, sur une longueur mesurée à partir de cette extrémité comprise entre la moitié et le triple du diamètre, une métallisation effectuée à l'aide d'un chalumeau oxyacétylénique selon un procédé appelé schoopage et d'un alliage métallique inoxydable constitué de fer et de l'un des métaux du groupe chrome, nickel, cobalt, allié ou non au carbure de tungstène. Cet alliage est généralement mis en oeuvre à l'état de poudre, et il est projeté également sur les sections d'extrémité du tube. L'épaisseur d'alliage déposé varie suivant les applications de 200 à 600 microns.

Au cours de cette première étape réalisée en atelier, on dépose sur la paroi interne du tube, et ceci sur presque toute sa longueur un revêtement qui peut être constitué de résines thermoplastiques choisies dans le groupe des polyamides, des résines fluorées, des polyéthylènes ou du PVC.

Ces résines sont avantageusement mises en oeuvre à partir de poudres fines d'une granulométrie comprise entre 10 et 400 microns et par des procédés connus, tels que le poudrage électrostatique, le trempage ou pour les tubes de plus grand diamètre, par rotomoulage.

Une réserve comprise entre la moitié et le double du diamètre du tube est respectée à chaque extrémité des tronçons de tubes à assembler, pour préserver le revêtement thermosensible de la fusion, ou de la pyrolyse provoquées par l'élévation de température que provoquerait l'opération de soudure autogène réalisée dans la deuxième étape sur chantier pour l'assemblage des tronçons de tubes.

On peut de même utiliser comme revêtement intérieur d'autres types de revêtements thermosensibles connus en utilisant le procédé décrit ci-dessus tels que des compositions thermodurcissables comme des polyuréthannes ou des résines époxy munies de catalyseurs durcissant à froid. On peut enfin utiliser des revêtements thermosensibles tels que des bitumes ou des ciments.

Suivant les cas l'épaisseur de ce revêtement varie de 200 microns à 5 mm.

La réserve respectée à chaque extrémité des tronçons de tubes et la longueur revêtue d'alliage métallique inoxydable déposée au préalable doit être telle que le revêtement thermosensible recouvre toujours le dépôt métallique inoxydable de façon à assurer la continuité de la protection de la paroi intérieure du tube.

La zone de recouvrement ne doit pas être inférieure à 20 mm mesurés dans le sens des génératrices du tube pour obtenir avec sécurité la continuité des revêtements protecteurs.

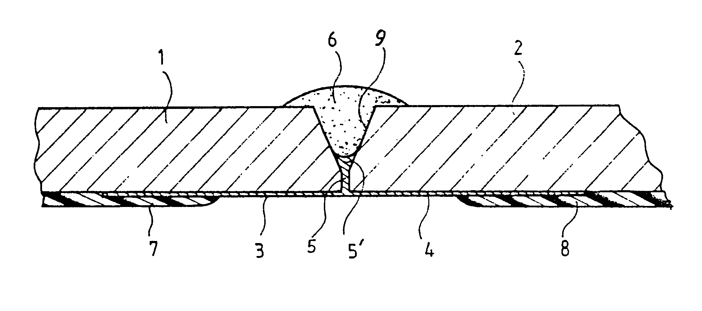

On comprendra mieux la disposition relative des couches des deux revêtements à l'aide de la figure qui représente en coupe axiale deux tronçons de tubes au voisinage de leur assemblage par soudure par cordon d'apport. Seule une moitié des sections a été représentée, la moitié située au-dessus de l'axe. Ainsi le haut de la figure représente-t-il l'extérieur du tube et le bas de la figure l'intérieur de ce tube.

La paroi du premier tube est représentée en (1) et en (2) la paroi du second tube. En (3) et (4) sont les revêtements préalables par le métal inoxydable de chaque tube de part et d'autre de la section d'assemblage. En (5) se voit le garnissage de la section terminale de chaque tube par projection au pistolet oxyacétylénique. En (7) et (8) se voit le garnissage par le revêtement thermosensible recouvrant en partie le précédent.

Les sections en regard des deux tubes ont reçu un chanfrein (9) de telle sorte qu'on peut remplir le fond du chanfrein du métal inoxydable (5') fourni par un premier cordon d'apport en alliage de composition identique à celle du revêtement appliqué au cours de la première étape. Ainsi est établie la liaison entre les revêtements inoxydables des deux extrémités des tubes en regard.

Le reste du chanfrein est rempli par le métal (6) en fusion du second cordon d'apport, réalisé dans le métal constituant le tube.

*Exemple*

Un tube de diamètre 200 mm reçoit sur sa paroi intérieure et sur sa tranche une application d'alliage inoxydable fer-chrome sur une épaisseur de 500 microns et sur une profondeur de 120 millimètres mesurée à partir de la section terminale. Il reçoit ensuite un revêtement de polyamide 11 par poudrage électrostatique d'une épaisseur de 600 microns avec une réserve de 80 millimètres mesurée à partir de la section terminale.

L'assemblage sur chantier se fera au cours de la deuxième étape par fusion d'un cordon d'apport en alliage fer-chrome qui solidarisera les deux tranches terminales garnies d'alliage au cours de la précédente étape, puis par un ou plusieurs cordons d'apport en fil d'acier pour obtenir une soudure conventionnelle suffisamment nourrie.

La tenue de l'ensemble à la corrosion est éprouvée en découpant les tubes de part et d'autre de la section d'assemblage, de façon à obtenir un manchon cylindrique d'une longueur de 0m,50.

Par pressage de ce manchon entre deux platines munies de joints d'étanchéité on obtient une capacité cylindrique de 15,70 litres, qui après perçage des orifices appropriés sera remplie d'une saumure à 4% de NaCl que l'on fait circuler en continu entre la capacité d'essai et un bac à l'aide d'une pompe d'un débit de 700 litres/mn.

Aucune corrosion n'est constatée après un essai de 150 jours, la saumure étant maitenue à une température de 40°C.

**Revendications**

1. Tubes métalliques assemblés bout à bout, en particulier oléoducs, caractérisés en ce que les sections terminales de ces tubes ainsi que les parois internes sont métallisées avec un alliage inoxydable sur une longueur mesurée à partir de chaque extrémité comprise entre le moitié et le triple du diamètre, et la paroi interne uniquement d'un revêtement thermosensible recouvrant partiellement sur au moins 200 millimètres le revêtement métallique inoxydable, et en ce que l'assemblage bout à bout des tubes ainsi revêtus intérieurement a été réalisé par soudure avec cordon d'apport en deux étapes, la première étape ayant mis en oeuvre un cordon d'alliage métallique inoxydable identiwue à l'alliage du revêtement et la seconde étape un cordon d'un métal identique à celui du tube.

2. Tubes métalliques assemblés bout à bout suivant la revendication 1, caractérisés en ce que le revêtement en alliage métallique inoxydable a des propriétés anticorrosion et est obtenu à partir d'un des métaux du groupe chrome, nickel, cobalt allié au fer.

3. Tubes métalliques assemblés bout à bout suivant la revendication 1, caractérisés en ce que le revêtement enalliage métallique inoxydable offre des propriétés de résistance à l'abrasion et comporte du nickel allié au carbure de tungstène et au fer.

4. Tubes métalliques assemblés bout à bout suivant la revendication 1, caractérisés en ce que le revêtement thermosensible est constitué par une résine thermoplastique choisie dans le groupe des résines polyamides, des résines fluorées, des polyéthylènes ou du PVC.

5. Tubes métalliques assemblés bout à bout suivant la revendication 1, caractérisés en ce que le revêtement thermosensible est constitué par une résine thermodurcissable de la famille des polyuréthannes.

6. Tubes métalliques assemblés bout à bout suivant la revendication 1, caractérisés en ce que le revêtement thermosensible est constitué par une résine époxy durcissant à froid avec un catalyseur.

7. Tubes métalliques assemblés bout à bout suivant la revendication 1, caractérisés en ce que le revêtement thermosensible est constitué d'un corps choisi dans la famille des bitumes.

8. Tubes métalliques assemblés bout à bout suivant la revendication 1, caractérisés en ce que le revêtement thermosensible est constitué d'un corps de la famille des ciments.

9. Procédé d'assemblage bout à bout des tubes de la revendication 1, caractérisé en ce que l'on munit avant l'assemblage les parties terminales des tubes sur les tranches et sur les parois internes du revêtement en alliage inoxydable sur une longueur comprise entre un demi diamètre du tube et le triple de ce diamètre et ensuite les parois internes seulement d'un revêtement thermosensible sur une longueur plus faible que la longueur totale du tube avec une réserve à chaque extrémité de 1 à 2 diamètre, les deux revêtements successifs présentant une zone de recouvrement d'au moins 20 mm, et en ce que l'assemblage des tubes bout à bout est réalisé par soudure avec cordon d'apport en deux étapes, la première étape utilisant un cordon d'apport en alliage métallique inoxydable identique à l'alliage du revêtement et la seconde étape un cordon d'apport d'un métal identique à celui du tube.

10. Procédé d'assemblage de tubes selon la revendication 9, caractérisé en ce que le revêtement en alliage inoxydable est réalisé dans un alliage de fer et de l'un des métaux du groupe chrome, cobalt, nickel, allié ou non au carbure de tungstène.

11. Procédé d'assemblage de tubes selon la revendication 9, caractérisé en ce que le revêtement thermosensible est réalisé dans l'un des matériaux du groupe:
. Polymères thermoplastique (polyamides, résines, fluorées, polyéthylènes ou PVC),
. Polymères thermodurcissables (polyuréthannes, époxy, durcissant à froid),
. Bitumes,
. Ciments.

## Patentansprüche

1. An den Enden zusammenstossende Metallrohre, insbesondere Ölleitungen, dadurch gekennzeichnet, dass die Endbereiche dieser Rohre so wie die Innenwände mit einer nicht-oxidierbaren Legierung auf eine Länge metallisiert sind, gemessen von jedem äusseren Ende, zwischen der Hälfte des Durchmessers und dem Dreifachen des Durchmessers und nur die Innenwände mit einem temperaturempfindlichen Überzug, der teilweise auf mindestens 20 mm den Überzug aus dem nicht-oxidierbaren Metall bedeckt, und dass die somit innen gefütterte Anordnung der an den Enden zusammenstossenden Rohre hergestellt wird durch Verschweissen mit einem Schweissdraht in zwei Stufen, wobei die erste Stufe einem Draht aus der gleichen nicht-oxidierbaren Metallegierung, wie die Legierung des Überzugs und die zweite Stufe mit einem Draht aus einem Metall, das gleich ist wie das des Rohres durchgeführt wurde.

2. An den Enden zusammenstossende Metallrohre nach Anspruch 1, dadurch gekennzeichnet, dass der Überzug aus der nicht-oxidierbaren Metallegierung Antikorrosions-Eigenschaften besitzt und erhalten worden ist, ausgehend von einem der Metalle der Gruppe Chrom, Nickel, Kobalt legiert mit Eisen.

3. An den Enden zusammenstossende Metallrohre nach Anspruch 1, dadurch gekennzeichnet, dass der Überzug aus der nicht-oxidierbaren Metallegierung Abriebfestigkeit besitzt und aus Nickel, legiert mit Wolframcarbind und Eisen besteht.

4. An den Enden zusammenstossende Metallrohre nach Anspruch 1, dadurch gekennzeichnet, dass der temperaturempfindliche Überzug aus einem thermoplastischen Harz besteht, ausgewählt aus der Gruppe der Polyamidharze, fluorierten Harze, Polyethylenen oder PVC.

5. An den Enden zusammenstossende Metallrohre nach Anspruch 1, dadurch gekennzeichnet, dass der temperaturempfindliche Überzug aus einem warmhärtenden Harz aus der Gruppe der Polyurethane besteht.

6. An den Enden zusammenstossende Metallrohre nach Anspruch 1, dadurch gekennzeichnet, dass der temperaturempfindliche Überzug aus einem in der Kälte mit einem Katalysator härtenden Epoxyharz besteht.

7. An den Enden zusammenstossende Metallrohre nach Anspruch 1, dadurch gekennzeichnet, dass der temperaturempfindliche Überzug aus einer Substanz ausgewählt aus der Gruppe der Bitumina besteht.

8. An den Enden zusammenstossende Metallrohre nach Anspruch 1, dadurch gekennzeichnet, dass der temperaturempfindliche Überzug aus einer Substanz ausgewählt aus der Gruppe der Zemente besteht.

9. Verfahren zum an den Enden Zusammenfügen von Rohren nach Anspruch 1, dadurch gekennzeichnet, dass man vor dem Zusammensetzen der Endteile der Rohre auf die Schnittflächen und auf die Innenwände einen Überzug aus einer nicht-oxidierbaren Legierung aufbringt in einer Länge zwischen dem halben Durchmesser des Rohres und dem Dreifachen des Durchmessers und anschliessend nur die Innenflächen mit einem temperaturempfindlichen Überzug auf eine Länge, die geringer ist als die Gesamtlänge des Rohres, mit einer Schutzschicht an jedem äusseren Ende von ein bis zwei Durchmessern überzieht, die beiden aufeinanderfolgenden Überzüge einen überzogenen Bereich von mindestens 20 mm bilden und dass die Anordnung der aneinanderstossenden Rohre erhalten wird durch Verschweissen mit einem Schweissdraht in zwei Stufen, wobei in der ersten Stufe ein Schweissdraht aus einer nicht-oxidierbaren Metallegierung verwendet wird, die gleich ist der Legierung des Überzugs, und in der zweiten Stufe ein Schweissdraht aus einem Metall, das gleich ist demjenigen des Rohres.

10. Verfahren zum Zusammenfügen von Rohren nach Anspruch 9, dadurch gekennzeichnet, dass der Überzug aus der nicht-oxidierbaren Legierung hergestellt wird aus einer Legierung aus Eisen mit einem Metall aus der Gruppe Kobalt, Nickel legiert oder nicht mit Wolframcarbid.

11. Verfahren zum Zusammenfügen von Rohren nach Anspruch 9, dadurch gekennzeichnet, dass der temperaturempfindliche Überzug hergestellt wird aus Materialen der Gruppe:
— Thermoplastische Polymere (Polyamide, fluorierte Harze, Polyethylene oder PVC),
— Heiss härtende Polymere (Polyurethane, in der Kälte härtende Epoxy-Harze),
— Bitumina,
— Zemente.

## Claims

1. Metal pipes joined end to end, especially oil pipelines, characterized in that the end sections of these pipes and the inner walls are coated with a non-oxidizing metall alloy over a length, measured from each end, of between half and three times the diameter, and the inner wall only being coated with a heat-sensitive covering which covers the non-oxidizing metall covering partially over at least 20 millimetres, and in the the pipes covered on the inside in this way have been joined end to end by welding with a buildup bead in two steps, the first step using a bead of non-oxidizing metal alloy identical to the alloy of the covering, and the second step using a bead of a metal identical to that of the pipe.

2. Metal pipes joined end to end according to Claim 1, characterized in that the covering consisting of a non-oxidizing metall alloy has anti-corrosion properties and is obtained from one of the metals of the group comprising chrome, nickel and cobalt alloyed with iron.

3. Metal pipes joined end to end according to Claim 1, characterized in that the covering consisting of a non-oxidizing metall alloy has properties of abrasion resistance and comprises nickel alloyed with tungsten carbide and with iron.

4. Metal pipes joined end to end according to Claim 1, characterized in that the heat-sensitive covering consists of a thermoplastic resin selected from the group comprising polyamide resins, fluorocarbon resins, polyethylenes or PVC.

5. Metal pipes joined end to end according to Claim 1, characterized in that the heat-sensitive covering consists of a thermosetting resin of the group comprising polyurethanes.

6. Metal pipes joined end to end according to Claim 1, characterized in that the heat-sensitive covering consists of an epoxy resin cold-cured with a catalyst.

7. Metal pipes joined end to end according to Claim 1, characterized in that the heat-sensitive covering consists of a body selected from the group comprising bitumens.

8. Metal pipes joined end to end according to Claim 1, characterized in that the heat-sensitive covering consists of a body from the group comprising cements.

9. Process for joining pipes according to Claim 1 end to end, characterized in that, before joining, the end parts of the pipes are equipped, on the edges and on the inner walls, with the covering of non-oxidizing alloy over a length of between half the diameter of the pipe and three times this diameter, and subsequently the inner walls only are equipped with a heat-sensitive covering over a length shorter than the total length of the pipe, with a reserve of 1 to 2 diameters at each end, the two successive coverings having an overlap zone of at least 20 mm, and in that the pipes are joined end to end by welding with a build-up bead in two steps, the first step using a build-up bead of a non-oxidizing metal alloy identical to the alloy of the covering, and the second step using a build-up bead of a metal identical to that of the pipe.

10. Process for joining pipes according to Claim 9, characterized in that the covering of non-oxidizing alloy is produced from an alloy of iron and of one of the metals of the group comprising chrome, cobalt and nickel alloyed with tungstene carbide or not.

11. Process for joining pipes according to Claim 9, characterized in that the heat-sensitive covering is produced from one of the materials of the group comprising:
. Thermoplastic polymers (polyamides, fluorocarbon resins, polyethylenes or PVC),
. Thermosetting polymers (polyurethanes, cold-curing epoxy resins),
. Bitumens,
. Cements.